# EUROPÄISCHE PATENTSCHRIFT

(11) **EP 0 952 324 B1**
(45) Veröffentlichungstag und Bekanntmachung des Hinweises auf die Patenterteilung: **31.03.2004**
(21) Anmeldenummer: 99107218.2
(22) Anmeldetag: 14.04.1999
(51) Int. Cl.: F02D 43/00, F02B 37/12, F02D 41/04, F02D 35/00, B60K 28/16

(54) **Anordnung zum Wiederaufbauen des Drehmoments einer aufgeladenen Brennkraftmaschine nach einem ASR-Eingriff**
Apparatus for rebuilding the torque of turbocharged engine after operating under anti-slip regulation
Dispositif pour réétablir le couple d'un moteur turbo-compressé après fonctionnement en mode antipatinage

(30) Priorität: 22.04.1998 DE 19817885
(43) Veröffentlichungstag der Anmeldung: 27.10.1999
(73) Patentinhaber: ROBERT BOSCH GMBH, 70442 Stuttgart (DE)
(72) Erfinder: Baeuerle, Michael, 71706 Markgroeningen (DE)

(56) Entgegenhaltungen:
- EP-A- 0 451 783
- DE-A- 4 223 253
- DE-A- 19 519 381
- US-A- 5 423 392

## Beschreibung

### Stand der Technik

Für eine Antischlupfregelung (ASR) wird üblicherweise das Motordrehmoment abgesenkt. Bei einer aufgeladenen Brennkraftmaschine erfolgt das durch einen Eingriff in die Ladedruckregelung, wobei der Ladedrucksollwert entsprechend reduziert wird. Die Absenkung des Motordrehmoments geschieht im Gegensatz zum nachfolgenden Wiederaufbau relativ schnell. Der Erfindung liegt daher die Aufgabe zugrunde, eine Anordnung anzugeben, mit der der Wiederaufbau des Drehmoments einer aufgeladenen Brennkraftmaschine nach einem ASR-Eingriff möglichst rasch erfolgt.

Aus der US 5,423, 392 ist es bekannt, dass für eine aufgeladene Brennkraftmaschine vorgesehen ist, einen Schlupf des Antriebsrades durch Reduzierung des Motormomentes zu steuern, wenn das Ausmaß der Schlupfes im Verhältnis zur Straßenoberfläche groß wird.

Aus der DE 4223 253 A 1 ist eine Steuereinrichtung für ein Fahrzeug bekannt, bei der eine Verstelleinrichtung im Rahmen eines Regelkreises in verschiedenen Betriebsphasen des Fahrzeugs durch verschiedene Betriebsmodi verstellt wird, wobei die verschiedenen Betriebsmodi unterschiedliche Dynamikanforderungen an den Regler stellen. Es ist daher vorgesehen, einen digitalen Rechner vorzusehen, der für die verschiedenen Betriebsmodi unterschiedliche, an den jeweiligen Betriebsmodus speziell angepasste Dynamikwerte aufweist.

### Vorteile der Erfindung

Die genannte Aufgabe wird mit dem Merkmalen des Anspruchs 1 dadurch gelöst, dass erste Mittel vorhanden sind, die aus einem vorgegebenen Füllungs-Sollwert einen Saugrohrdruck-Sollwert bilden und daraus über mindestens ein Kennfeld ein Druckverhältnis des Saugrohrdruck-Sollwertes zu einem Ladedruck-Sollwert ableiten. Dieses Druckverhältnis ist gleich dem Druckverhältnis an der Drosselklappe. Zudem sind zweite Mittel vorhanden, welche bei einer dynamischen Fahrweise auf ein von dem mindestens einen Kennfeld geliefertes Druckverhältnis umschalten, das geringer ist als im stationären Betrieb, und am Ende der dynamischen Fahrweise seinen allmählichen Übergang von dem niedrigeren Druckverhältnis auf ein höheren Druckverhältnis veranlassen. Diese zweiten Mittel schalten bei einem ASR-Eingriff das gleiche Druckverhältnis durch wie bei einer dynamischen Fahrweise.

Für den Wiederaufbau des Drehmoments wird gemäß der Erfindung eine Anordnung verwendet, die bereits für eine andere Funktion; nämlich für die Umschaltung zwischen den beiden Betriebsmodi des dynamischen und des stationären Fahrbetriebs, vorhanden ist. Eigene Schaltungsmittel für den Wiederaufbau des Drehmoments nach einem ASR-Eingriff sind daher nicht erforderlich. Im übrigen hat die erfindungsgemäße Anordnung den Vorteil, daß sie nach einem ASR-Eingriff das Drehmoment sehr schnell wieder aufbaut. Denn durch die Umschaltung auf ein kleineres Druckverhältnis wird der Reduzierung des Ladedruck-Sollwertes entgegengewirkt, so daß der Drehmomentenabbau im wesentlichen durch die Drosselklappe erfolgt. Bei Rücknahme des ASR-Eingriffs kann nun über die Drosselklappe das höhere Soll-Drehmoment wesentlich spontaner eingestellt werden, da der Ladedruck vorher nur geringfügig abgebaut worden ist und nachfolgend deutlich weniger wieder aufgebaut werden muß.

Vorteilhafte Weiterbildungen der Erfindung gehen aus den Unteransprüchen hervor. Danach wird in einem oder mehreren Kennfeldern das Druckverhältnis für den dynamischen wie für den stationären Fahrbetrieb in Abhängigkeit von der Motordrehzahl und vom Saugrohrdruck-Sollwert gebildet. Vorzugsweise stellt ein erstes Kennfeld das Druckverhältnis für dynamischen Fahrbetrieb und ein zweites Kennfeld das Druckverhältnis für stationären Fahrbetrieb bereit.

Die zweiten Mittel, welche das Druckverhältnis für die verschiedenen Betriebsmodi umschaltet, bestehen zweckmäßigerweise aus einem ODER-Gatter, an dessen Eingängen mindestens ein Bit, das durch eine logische 1 eine dynamische Fahrweise signalisiert, und ein zweites Bit anliegt, das durch eine logische 1 einen ASR-Eingriff signalisiert. Das Ausgangssignal des ODER-Gatters steuert eine Schaltung, die bei einer logischen 1 am Ausgang des ODER-Gatters das Druckverhältnis für dynamischen Fahrbetrieb aus dem mindestens einen Kennfeld bzw. dem ersten Kennfeld durchschaltet und die beim Übergang von einer logischen 1 auf eine logische 0 am Ausgang des ODER-Gatters mit einer vorgegebenen Zeitkonstanten allmählich vom Druckverhältnis für dynamischen Fahrbetrieb auf das Druckverhältnis für stationären Betrieb aus dem mindestens einen Kennfeld bzw. dem zweiten Kennfeld umschaltet.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Blockschaltbild, das die Steuerung einer Brennkraftmaschine verdeutlicht,
Figur 2 ein Blockschaltbild für die Steuerung der Drosselklappenstellung und des Ladedrucks und
Figur 3 ein Blockschaltbild, das die Herleitung eines Ladedruck-Sollwertes darstellt.

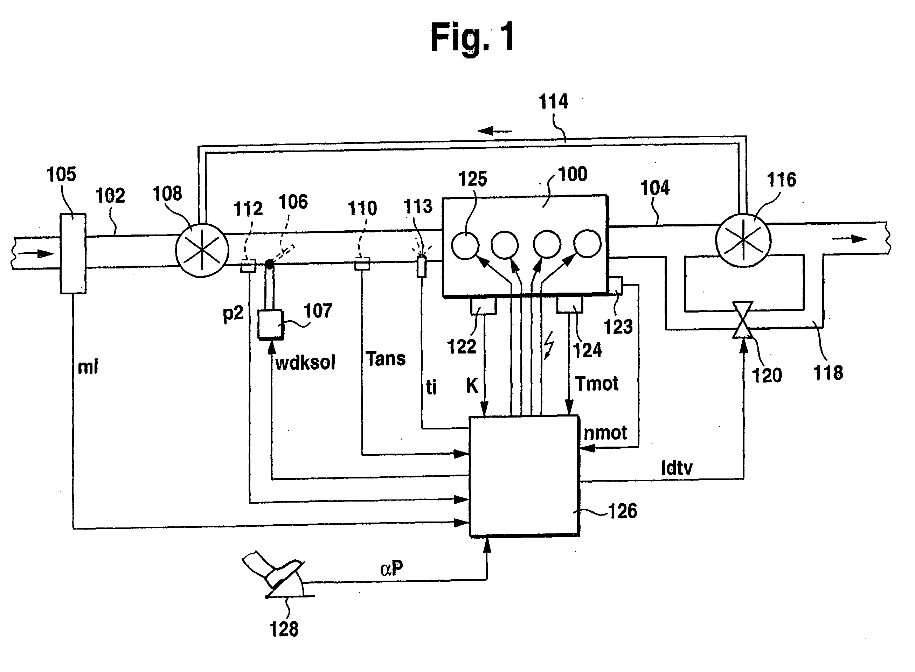

Die Figur 1 zeigt eine Brennkraftmaschine 100 mit einem Ansaugtrakt 102 und einem Abgaskanal 104. Im Ansaugtrakt 102 sind - in Stromrichtung der angesaugten Luft gesehen - ein Meßsensor 105 für die Luftmenge oder Luftmasse mL, ein Verdichter 108 eines Turboladers, ein Drucksensor 112 zum Erfassen des Ladedrucks p2, ein Temperatursensor 110 zum Erfassen der Temperatur Tans der von der Brennkraftmaschine 100 angesaugten Luft und eine oder mehrere Einspritzdüsen 113 angeordnet. Der Verdichter 108 des Turboladers wird über eine Verbindungsleitung 114 von einer im Abgaskanal 104 angeordneten Turbine 116 angetrieben. Eine Bypassleitung 118 überbrückt die Turbine 116. In der Bypassleitung 118 ist ein Bypassventil 120 angeordnet, womit der vom Turbolader erzeugte Ladedruck gesteuert werden kann. Außerdem befindet sich an der Brennkraftmaschine 100 ein Klopfsensor 122, der bei einer klopfenden Verbrennung ein Klopfsignal K abgibt, ein Drehzahlsensor 123 zum Erfassen der Drehzahl nmot und ein Temperatursensor 124, der die Motortemperatur Tmot erfaßt. Die Brennkraftmaschine 100 besitzt beispielsweise vier Zylinder 125, die mit je einer Zündkerze bestückt sind.

Einem Steuergerät 126 werden folgende Signale zugeführt: Das Signal ml des Luftmengen- oder Luftmassenmessers 105, das Signal p2 des Drucksensors 112, das Signal Tans des Temperatursensors 110 für die Temperatur der angesaugten Luft, das Signal K des Klopfsensors 122, das Signal nmot des Drehzahlsensors 123, das Signal Tmot des Temperatursensors 124 für die Motortemperatur und das Signal αP eines Fahrpedalwertgebers 128. Ausgegeben werden vom Steuergerät 126 ein Signal wdksol für den Stellantrieb 107 der Drosselklappe 106, ein Signal ldtv zur Steuerung des Bypassventils 120 und ein Signal ti für die Zumessung des Kraftstoffs durch die Einspritzdüsen 113.

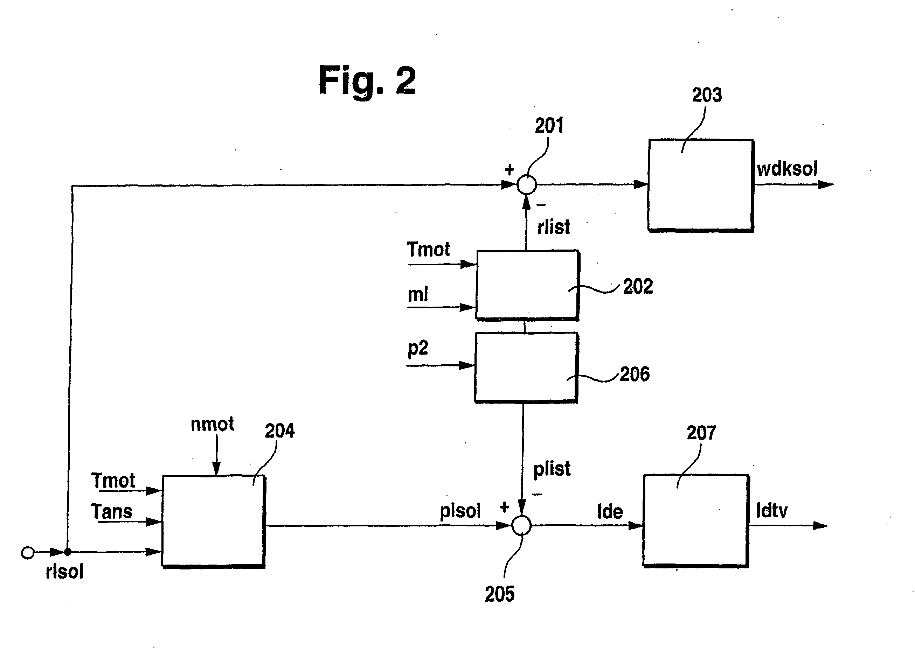

Das Steuergerät 126 enthält eine in Figur 2 dargestellte Schaltung zur Steuerung bzw. Regelung der Drosselklappenstellung und des Ladedrucks. Das Eingangssignal der in Figur 2 gezeigten Steuer- bzw. Regelanordnung ist ein Füllungs-Sollwert rlsol, der aus einer Drehmomentenvorgabe aufgrund verschiedener Eingriffe-wie z.B. Fahrpedalstellung, Geschwindigkeitsregelung, Getrieberegelung, Antischlupfregelung - errechnet wird. Da die Herleitung des Füllungs-Sollwertes rlsol nicht Gegenstand der Erfindung ist, wird hier nicht näher darauf eingegangen.

Der Füllungs-Sollwert rlsol wird einem Verknüpfungspunkt 201 zugeführt, in dem seine Ablage von einem Füllungs-Istwert rlist bestimmt wird. Der Füllungs-Istwert rlist (auch als Motorlast bezeichnet) wird in einem Schaltblock 202 in Abhängigkeit von der Motordrehzahl nmot und der angesaugten Luftmasse bzw. -menge mL ermittelt. Ein Füllungsregler 203 leitet aus der Ablage zwischen dem Füllungs-Sollwert rlsol und dem Füllungs-Istwert rlist das Steuersignal wdksol für den Drosselklappen-Stellantrieb 107 ab.

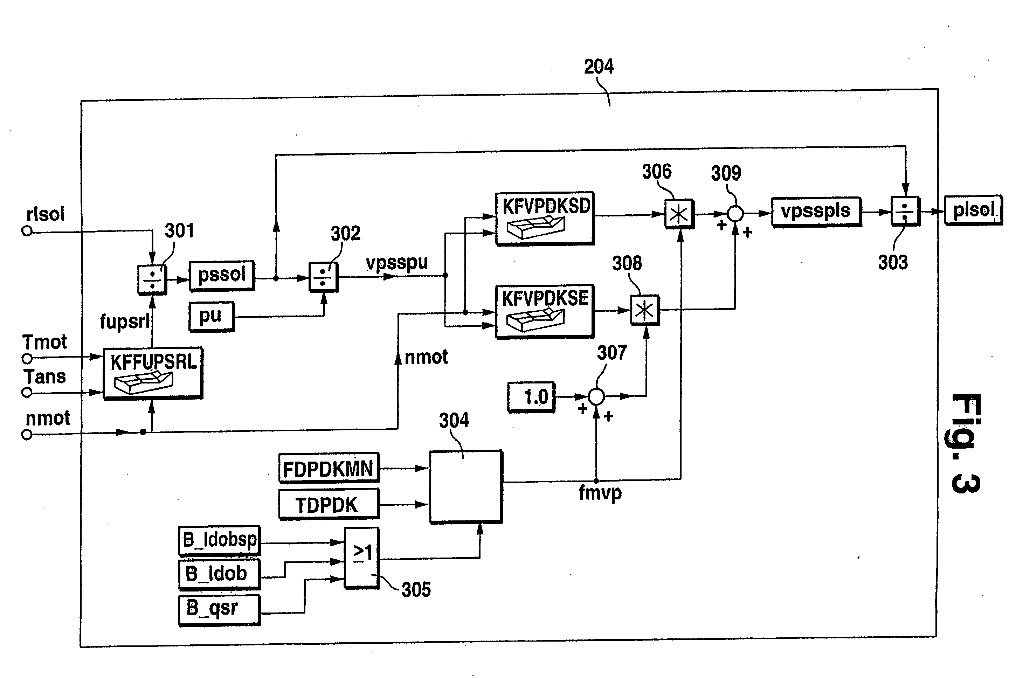

Aus dem Füllungs-Sollwert rlsol wird ebenfalls das Steuersignal ldtv für das den Ladedruck einstellende Bypassventil hergeleitet. Dazu wird der Füllungs-Sollwert rlsol einem im Zusammenhang mit Figur 3 noch näher erläuterten Schaltblock 204 zugeführt, in dem in Abhängigkeit von der Motordrehzahl nmot, der Motortemperatur Tmot und der Ansauglufttemperatur Tans aus dem Füllungs-Sollwert rlsol ein Ladedruck-Sollwert plsol abgeleitet wird.

In einem Verknüpfungspunkt 205 wird die Ablage zwischen dem Ladedruck-Sollwert plsol und dem Ladedruck-Istwert plist bestimmt. Den Ladedruck-Istwert plist leitet ein Schaltblock 206 aus dem Meßsignal p2 des Drucksensors 112 ab. Das Ablagesignal lde zwischen dem Ladedruck-Sollwert plsol und dem Ladedruck plist wird einem Ladedruckregler, z.B. PID-Regler 207, zugeführt, welcher schließlich eine Stellgröße ldtv für das Bypassventil 120 des Turboladers abgibt.

Wie nachfolgend beschrieben, wird mit dem in Figur 3 dargestellten Schaltblock 204 ein Ladedruck-Sollwert plsol erzeugt, der davon abhängt, ob ein dynamischer oder ein stationärer Fahrbetrieb vorliegt und ob ein ASR-Eingriff aktiviert worden ist.

Es wird zunächst ein Saugrohrdruck-Sollwert plsol durch Quotientenbildung zwischen dem Füllungs-Sollwert rlsol und einem Faktor fupsrl in einem Dividierer 301 erzeugt. Der Faktor fupsrl kann z.B. in Abhängigkeit von der Motordrehzahl nmot, der Motortemperatur Tmot und der Ansauglufttemperatur Tans aus einem Kennfeld KFFUPSRL abgeleitet werden. Ein Dividierer 302 bildet ein Druckverhältnis vpsspu aus dem Saugrohrdruck-Sollwert pssol und dem Umgebungsdruck pu. Sowohl dieses Druckverhältnis vpsspu als auch die Motordrehzahl nmot werden einem ersten Kennfeld KFVPDKSD und einem zweiten Kennfeld KFVPDKSE zugeführt. In Abhängigkeit von diesen beiden genannten Eingangsgrößen bilden nämlich die beiden Kennfelder unterschiedliche Druckverhältnisse vpsspls des Saugrohrdruck-Sollwertes zu einem Ladedruck-Sollwert. Dieses Druckverhältnis vpsspls entspricht dem Druckverhältnis an der Drosselklappe. Und zwar liefert das erste Kennfeld KFVPDKSD ein Druckverhältnis vpsspls für den Fall eines dynamischen Fahrbetriebs und das zweite Kennfeld KFVPDKSE liefert ein Druckverhältnis vpsspls für einen stationären Fahrbetrieb. Im Falle eines dynamischen Fahrbetriebs wird das Druckverhältnis vpsspls aus dem ersten Kennfeld KFVPDKSD und im Falle eines stationären Fahrbetriebs das Druckverhältnis vpsspls aus dem zweiten Kennfeld KFVPDKSE durchgeschaltet. Das Druckverhältnis vpsspls für dynamischen Fahrbetrieb ist kleiner als das Druckverhältnis vpsspls für stationären Fahrbetrieb.

Wird nun in einem Dividierer 303 das Druckverhältnis vpsspls durch den Saugrohrdruck-Sollwert pssol dividiert, so ergibt sich für den dynamischen Fahrbetrieb ein größerer Ladedruck-Sollwert plsol und ein kleinerer Drosselklappenwinkel als für den stationären Fahrbetrieb. Demnach wird der Ladedruck-Sollwert plsol gegenüber dem Saugrohrdruck-Sollwert pssol erhöht und die Drosselklappe partiell geschlossen, wenn aufgrund des Fahrerwunsches ein dynamischer Betrieb des Motors gefordert, also Wert auf eine gute Fahrbarkeit gelegt wird. Die Maschine hat bei einem solchen Fahrmodus einen schlechten Wirkungsgrad und arbeitet nicht wirtschaftlich. Ist dagegen mehr ein guter Wirkungsgrad gefordert, nämlich im stationären Betrieb, so wird der Ladedruck-Sollwert plsol soweit verringert, daß er in etwa dem Saugrohrdruck-Sollwert pssol entspricht. Gleichzeitig wird die Drosselklappe voll geöffnet. Somit ist eine rasche Anpassung der Maschine an den jeweiligen Fahrmodus möglich.

Für die Umschaltung zwischen den beiden Kennfeldern KFVPDKSD und KFVPDKSE auf das für den jeweiligen Betriebsmodus günstige Druckverhältnis vpsspls ist ein in einem Schaltblock 304 erzeugtes Steuerssignal fmvp zuständig. Signalisiert beispielsweise der Fahrer über das Fahrpedal eine dynamische Fahrweise, welche sich dadurch ausdrückt, daß ein Bit B_ldob für einen Overboost auf logisch 1 gesetzt ist oder noch die nach einem Overboost anliegende Overboost Sperrzeit durch die logische 1 eines Bits B_ldobsp gegeben ist, so gibt ein ODER-Gatter 305, an dessen Eingängen die beiden Bits B_ldob und B_ldobsp anliegen, eine logische 1 an den Schaltblock 304 ab. Bei einer logischen 1 am Ausgang des ODER-Gatters 305 setzt der Schaltblock 4 sein Steuersignal fmvp auf einen Wert 1.0. Dieses Steuersignal fmvp wird einerseits mit dem Ausgangssignal des ersten Kennfeldes KFVPDKSD in einem ersten Multiplizierer 306 und andererseits nach Differenzbildung im Verknüpfungspunkt 307 mit dem Wert 1.0 mit dem Ausgangssignal des zweiten Kennfeldes KFVPDKSE in einem Multiplizierer 308 multipliziert. Wenn nun, wie gesagt, das Steuersignal fmvp den Wert 1.0 hat, wird das Ausgangssignal des zweiten Kennfeldes KFVPDKSE mit dem Wert 0.0 und das Ausgangssignal des ersten Kennfeldes KFVPDKSD mit dem Wert 1.0 multipliziert. Der Effekt dabei ist, daß in diesem Fall am Ausgang eines Verknüpfungspunktes 309, in dem die beiden Ausgangssignale der Multiplizierer 306 und 308 addiert werden, das Druckverhältnis vpsspls aus dem ersten Kennfeld KFVPDKSD für dynamischen Fahrbetrieb zur Verfügung steht.

Bei einem Übergang von einem dynamischen Fahrbetrieb auf einen stationären Fahrbetrieb wechseln die Bits B_ldob bzw. B_ldobsp ihren Zustand von logisch 1 auf logisch 0, so daß am Ausgang des ODER-Gatters 305 eine logische 0 anliegt. Dann läßt der Schaltblock 304 sein Steuersignal fmvp vom Maximalwert 1.0 auf einen Minimalwert FDPDKMN = 0.0 allmählich mit einer Zeitkonstanten TDPDK absinken. Dadurch wird das Ausgangssignal des ersten Kennfeldes KFVPDKSD allmählich auf den Wert 0.0 reduziert und gleichzeitig das Ausgangssignal des zweiten Kennfeldes KFVPDKSE von 0.0 auf den vollen Wert des Druckverhältnisses vpsspls für stationären Betrieb hochgefahren. Der Übergang vom Druckverhältnis vpsspls für dynamischen Betrieb auf ein Druckverhältnis für stationären Betrieb findet also nicht ruckartig sondern allmählich statt.

Die vorangehend beschriebene Anordnung zur Ermittlung eines Ladedruck-Sollwertes plsol für die beiden Betriebszustände, dynamischer Fahrbetrieb und stationärer Fahrbetrieb, wird ebenfalls verwendet zum Wiederaufbau des Motordrehmoments nach einem ASR-Eingriff. Dazu wird lediglich an einem weiteren Eingang des ODER-Gatters 305 ein Bit B_asr gelegt, das den Zustand logisch 1 annimmt, wenn ein ASR-Eingriff erfolgt. Wird der ASR-Eingriff zurückgenommen, so ist durch das zeitverzögerte Umschalten des Steuersignals fmvp vom Wert 1.0 auf den Wert 0.0 unmittelbar nach der Rücknahme des ASR-Eingriffs noch das Druckverhältnis vpsspls aus dem ersten Kennfeld KFVPDKSD für dynamischen Fahrbetetrieb durchgeschaltet. Das bedeutet, daß der Drehmomentenwiederaufbau wegen des höheren Ausgangsniveaus des Ladedruck-Sollwertes plsol sehr rasch stattfindet. Denn durch die Umschaltung auf ein kleineres Druckverhältnis wird der Reduzierung des Ladedruck-Sollwertes entgegengewirkt, so daß der Drehmomentenabbau im wesentlichen durch die Drosselklappe erfolgt. Bei Rücknahme des ASR-Eingriffs kann nun über die Drosselklappe das höhere Soll-Drehmoment wesentlich spontaner eingestellt werden, da der Ladedruck vorher nur geringfügig abgebaut worden ist und nachfolgend deutlich weniger wieder aufgebaut werden muß.

Anstelle von zwei getrennten Kennfeldern KFVPDKSD und KFVPDKSE kann auch ein einziges Kennfeld vorgesehen werden, das beide Funktionen in sich vereinigt.

## Patentansprüche

1. Anordnung zum Wiederaufbau des Drehmoments einer aufgeladenen Brennkraftmaschine nach einem ASR-Eingriff, wobei erste Mittel (301, KFFUPSRL) vorhanden sind, die aus einem vorgegebenen Füllungs-Sollwert (rlsol) einen Saugrohrdruck-Sollwert (pssol) bilden und daraus über mindestens ein Kennfeld (KFVPDKSD, KFVPDKSE) ein Druckverhältnis (vpsspls) des Saugrohrdruck-Sollwertes (pssol) zu einem Ladedruck-Sollwert (plsol) ableiten, **dadurch gekennzeichnet, dass** zweite Mittel (304, ..., 309) vorhanden sind, welche bei einer dynamischen Fahrweise auf ein von dem mindestens einen Kennfeld (KFVPDKSD, KFVPDKSE) geliefertes Druckverhältnis (vpsspls) umschalten, das geringer ist als im stationären Betrieb, und am Ende der dynamischen Fahrweise einen allmählichen Übergang von dem niedrigeren Druckverhältnis auf ein höheres Druckverhältnis veranlassen und dass die zweiten Mittel (304, ..., 309) bei einem ASR-Eingriff das gleiche Druckverhältnis (vpsspls) durchschalten wie bei einer dynamischen Fahrweise.

2. Anordnung nach Anspruch 1, **dadurch gekennzeichnet, daß** das mindestens eine Kennfeld (KFVPDKSD, KFVPDKSE) das Druckverhältnis (vpsspls) für den dynamischen wie für den stationären Fahrbetrieb in Abhängigkeit von der Motordrehzahl (nmot) und vom Saugrohrdruck-Sollwert (pssol) bildet.

3. Anordnung nach Anspruch 1 oder 2, **dadurch gekennzeichnet, daß** ein erstes Kennfeld (KFVPDKSD) das Druckverhältnis (vpsspls) für dynamischen Fahrbetrieb und ein zweites Kennfeld (KFVPDKSE) das Druckverhältnis (vpsspls) für stationären Fahrbetrieb bereitstellt.

4. Anordnung nach Anspruch 1 oder 3, **dadurch gekennzeichnet, daß** die zweiten Mittel (304, ..., 309) ein ODER-Gatter (305) aufweisen, an dessen Eingängen mindestens ein Bit (B_ldob, B_ldobsp), das durch eine logische 1 eine dynamische Fahrweise signalisiert, und ein zweites Bit (B_asr) anliegt, das durch eine logische 1 einen ASR-Eingriff signalisiert, und daß das Ausgangssignal des ODER-Gatters (305) eine Schaltung (304) steuert, die bei einer logischen 1 am Ausgang des ODER-Gatters (305) das Druckverhältnis (vpsspls) für dynamischen Fahrbetrieb aus dem mindestens einen Kennfeld bzw. dem ersten Kennfeld (KFVPDKSD) durchschaltet und die beim Übergang von einer logischen 1 auf eine logische 0 am Ausgang des ODER-Gatters (305) mit einer vorgegebenen Zeitkonstanten (TDPDK) allmählich vom Druckverhältnis (vpsspls) für dynamischen Fahrbetrieb auf das Druckverhältnis (vpsspls) für stationären Betrieb aus dem mindestens einen Kennfeld bzw. dem zweiten Kennfeld (KFVPDKSE) umschaltet.

## Claims

1. Arrangement for building the torque of a supercharged internal combustion engine up again after an intervention by a traction control system, first means (301, KFFUPSRL) being present which form an intake manifold pressure setpoint value (pssol) from a predefined charge setpoint value (rlsol) and derive therefrom, by means of at least one characteristic diagram (KFVPDKSD, KFVPDKSE), a pressure ratio (vpsspls) of the intake manifold pressure setpoint value (pssol) to form a charge pressure setpoint value (plsol), **characterized in that** second means (304, ..., 309) are present which, in the case of a dynamic driving style, switch over to a pressure ratio (vpsspls) which is supplied by the at least one characteristic diagram (KFVPDKSD, KFVPDKSE) and is lower than in the steady-state operating mode, and, at the end of the dynamic driving style, bring about a gradual transition from the relatively low pressure ratio to a relatively high pressure ratio, and **in that**, in the case of an intervention by a traction control system, the second means (304, ..., 309) connect through the same pressure ratio (vpsspls) as in the case of a dynamic driving style.

2. Arrangement according to Claim 1, **characterized in that** the at least one characteristic diagram (KFVPDKSD, KFVPDKSE) forms the pressure ratio (vpsspls) for the dynamic driving mode and for the steady-state driving mode as a function of the engine speed (nmot) and of the intake manifold pressure setpoint value (pssol).

3. Arrangement according to Claim 1 or 2, **characterized in that** a first characteristic diagram (KFVPDKSD) makes available the pressure ratio (vpsspls) for the dynamic driving mode, and a second characteristic diagram (KFVPDKSE) makes available the pressure ratio (vpsspls) for the steady-state driving mode.

4. Arrangement according to Claim 1 or 3, **characterized in that** the second means (304, ..., 309) have an OR gate (305) at whose inputs at least one bit (B ldob, B ldobsp), which signals a dynamic driving style by means of a logic 1, and a second bit (B_asr), which signals an intervention by a traction control system by means of a logic 1, are present, and **in that** the output signal of the OR gate (305) controls a circuit (304) which, in the case of a logic 1 at the output of the OR gate (305), connects through the pressure ration (vpsspls) for the dynamic driving mode from the at least one characteristic diagram or the first characteristic diagram (KFVPDKSD), and which, in the case of a transition from a logic 1 to a logic 0 at the output of the OR gate (305), switches over gradually with a predefined time constant (TDPDK), from the pressure ratio (vpsspls) for the dynamic driving mode to the pressure ratio (vpsspls) for the steady-state mode from the at least one characteristic diagram or the second characteristic diagram (KFVPDKSE).

## Revendications

1. Dispositif pour la reconstruction du couple d'un moteur à combustion interne chargé après une intervention du dispositif ASR, dans lequel se trouvent des premiers relais (301, KFFUPSRL), qui forment à partir d'une valeur de consigne de remplissage prédéterminée (rlsol) une valeur de consigne de la pression à la tubulure d'admission (pssol) et à partir de là, par le biais d'au moins un diagramme caractéristique (KFVPDKSD, KFVPDKSE), déduisent un rapport de pression (vpsspls) entre la valeur de consigne de la pression à la tubulure d'admission (pssol) et une valeur de consigne de la pression d'admission (plsol),
**caractérisé en ce qu'**
il existe des deuxièmes relais (304, ..., 309) qui, lors d'un mode de conduite dynamique, passent à un rapport de pression (vpsspls) donné par au moins l'un des diagrammes caractéristiques (KFVPDKSD, KFVPDKSE), ce rapport de pression étant plus faible que lors d'un fonctionnement stationnaire, et à la fin du mode de conduite dynamique, permettent une transmission progressive du rapport de pression plus faible vers un rapport de pression plus élevé, et les deuxièmes relais (304, ..., 309) sélectionnent lors d'une intervention du dispositif ASR le même rapport de pression (vpsspls) que lors d'un mode de conduite dynamique.

2. Dispositif selon la revendication 1,
**caractérisé en ce qu'**
au moins un diagramme caractéristique (KFVPDKSD, KFVPDKSE) donne le rapport de pression (vpsspls) pour le mode de conduite dynamique tout comme pour le mode de conduite stationnaire, en fonction du couple moteur (mmot) et de la valeur de consigne de la pression à la tubulure d'admission (pssol).

3. Dispositif selon la revendication 1 ou 2,
**caractérisé en ce qu'**
un premier diagramme caractéristique (KFVPDKSD) met à disposition le rapport de pression (vpsspls) pour le mode de conduite dynamique et un deuxième diagramme caractéristique (KFVPDKSE) met à disposition le rapport de pression (vpsspls) pour le mode de conduite stationnaire.

4. Dispositif selon la revendication 1 ou 3,
**caractérisé en ce que**
les deuxièmes relais (304, ..., 309) présentent une barrière OU (305) aux entrées de laquelle se trouvent au moins un bit (B_ldob, B_ldobsp), qui signale par le biais d'un 1 logique un mode de conduite dynamique, et un deuxième bit (B_asr), qui signale par le biais d'un 1 logique une intervention du dispositif ASR, et le signal de sortie de la barrière OU (305) commande un circuit (304) qui, en présence d'un 1 logique au niveau de la sortie de la barrière OU (305), sélectionne le rapport de pression (vpsspls) pour le mode de conduite dynamique à partir d'au moins l'un des diagrammes caractéristiques ou à partir du premier diagramme caractéristique (KFVPDKSD) et qui passe progressivement, lors de la transition d'un 1 logique à un 0 logique au niveau de la sortie de la barrière OU (305), avec une constante de temps prédéterminée (TDPDK), du rapport de pression (vpsspls) pour le mode de conduite dynamique au rapport de pression (vpsspls) pour le fonctionnement stationnaire, à partir d'au moins l'un des diagrammes caractéristiques ou à partir du deuxième diagramme caractéristique (KFVPDKSE).
